# EUROPEAN PATENT APPLICATION

(11) **EP 4 732 738 A1**
(43) Date of publication of application: **29.04.2026**
(21) Application number: 24849505.3
(22) Date of filing: 26.07.2024
(51) Int. Cl.: A47L 15/42, A47L 15/50, F21V 33/00, F21K 9/237, F21V 31/00, F21V 19/00, F21S 10/00, F21Y 115/10

(54) **DISHWASHER**

(30) Priority: 28.07.2023 KR 20230098808; 07.03.2024 KR 20240032573
(71) Applicant: LG Electronics Inc., Yeongdeungpo-gu Seoul 07336 (KR)
(72) Inventor: CHOI, Dong Jun, Seoul 06772 (KR); JO, Yeon A, Seoul 06772 (KR); KIM, Yongnam, Seoul 06772 (KR); CHO, Sangwoog, Seoul 06772 (KR); PARK, Sung Hyun, Seoul 06772 (KR); KANG, Jin Won, Seoul 06772 (KR)
(74) Representative: Schornack, Oliver
(86) International application number: PCT/KR2024/010921
(87) International publication number: WO 2025/028936

(57) **Abstract**

The present invention relates to a dishwasher having a rod-shaped light-emitting surface of which the longitudinal width is much larger than the transverse width, wherein the light-emitting surface of a lighting device can be disposed as close as possible to the open front surface of a tub to improve light-emitting efficiency and visibility of the dishes placed inside the tub.

## Description

### [Technical Field]

The present disclosure relates to a dishwasher and, more specifically, to a dishwasher including a lighting device having a light-emitting surface having a rod shape of which a longitudinal width is much larger than a transverse width, wherein the light-emitting surface of the lighting device is positioned to be as close to an open front surface of a tub as possible, thereby improving visibility and luminous efficiency of dishes placed inside the tub.

### [Background Art]

A dishwasher is an apparatus that washes dishes and cooking utensils as washing targets stored therein by spraying washing water thereto. In this regard, the washing water may contain washing detergent.

A dishwasher generally includes a tub having a washing space defined therein, a dish rack that accommodates therein a washing target inside the washing tub, a spraying arm that sprays the washing water into the dish rack, and a sump that stores therein water and supplies the washing water to the spraying arm.

Using this dishwasher may allow a time and effort required to wash the dishes and other washing targets after a meal to be reduced, thereby contributing to user convenience.

Generally, the dishwasher is configured to perform a washing cycle for washing a washing target, a rinsing cycle for rinsing a washing target, and a drying cycle for drying a washing target that has been washed and rinsed.

In order to store the dishes inside the dishwasher before the process of the cycle, and to withdraw the washed and dried dishes after the completion of the cycle, the user should open and close the door.

At least one lighting device may be disposed inside the tub as a means for effectively checking a stored state, a washed state, and the like of the dishes in a situation where the dish rack in which the dishes are accommodated has not been extended to the outside of the tub when the door is opened or closed.

In consideration of a shape of the box-shaped tub having an open front surface, the lighting device may be disposed on one of a rear surface and both opposing side surfaces of the tub constituting inner surfaces of the tub and disposed to irradiate visible light toward the dishes.

However, the lighting device applied to the existing dishwasher may be formed in a shape of point lighting having a considerably small light-emitting area size.

Therefore, in general, it is difficult to effectively illuminate the dishes stored in the tub with only the single lighting device.

In this regard, U.S. Patent No. 10,281,134 (Prior Document 001) discloses a configuration of a dishwasher having a surface-lighting type lighting device having a light-emitting surface having a light-emitting area significantly greater than that of the point-lighting type.

A lighting device of a dishwasher disclosed in the prior art document 001 may include a plurality of lighting devices, and each of the lighting devices may be disposed to be fixed to a rear surface of the tub.

In this regard, a light source constituting each lighting device and composed of electric components is fixed to an outer surface of the rear surface of the tub so as not to be affected by a high temperature and high humidity environment formed inside the tub.

A plurality of through holes, each having an open area size corresponding to an area size of a light-emitting surface, are defined in the rear surface of the tub so as to correspond to the respective lighting devices, such that visible light generated from the light source may be introduced into the tub.

### [Disclosure]

### [Technical Problem]

The lighting device of the prior document 001 as described above is disposed on an inner surface of a rear portion of the tub so that a light-emitting surface thereof extend in a parallel manner to the inner surface of the rear portion of the tub, and the light-emitting surface illuminates the inside of the tub by irradiating the visible light in a direction from the rear portion of the tub toward a front portion thereof.

Therefore, the light-emitting surface of the lighting device is screened with the dishes mounted on the dish rack, such that the lighting effect of the dishes disposed at the front side of the dish rack is inevitably reduced.

In addition, the lighting device of the prior document 001 is configured such that some components thereof are disposed outside the tub and the remaining components are disposed inside the tub.

As described above, a plurality of fasteners extending through the tub act as a means for fastening both the components of the lighting device disposed inside the tub and the components of the lighting device disposed outside the tub to the tub.

Accordingly, the dishwasher of the prior art document 001 has a problem in that a through hole having a significantly large open area corresponding to an area of the light-emitting surface should be formed in the rear portion of the tub, and fastening holes through which fasteners pass and are arranged around the through hole should be formed in the rear portion of the tub, such that the rigidity of the rear portion of the tub is significantly deteriorated.

In addition, the dishwasher of the prior document 001 has a problem in that a manufacturing cost and a manufacturing time thereof may be increased due to additional formation of the fastening holes in addition to the through hole.

A first technical purpose of the present disclosure is to provide a dishwasher including a lighting device having a light-emitting surface having a rod shape of which a longitudinal width is much larger than a transverse width, wherein the light-emitting surface of the lighting device is positioned to be as close to an open front surface of a tub as possible, thereby improving visibility and luminous efficiency of dishes placed inside the tub.

In addition, a second technical purpose of the present disclosure is to provide a dishwasher in which the light-emitting surface is positioned to be as close as possible to a front surface of the tub, and the lighting device and the light-emitting surface are positioned at a position at which interference thereof with other components constituting the dishwasher may be minimized, thereby maximizing space utilization.

In addition, a third technical purpose of the present disclosure is to provide a dishwasher in which the lighting device is entirely disposed inside the tub, thereby minimizing the size of the opening, effectively preventing decrease in the rigidity of the tub, and remarkably reducing a possibility of water leakage.

Technical purposes of the present disclosure are not limited to the above-mentioned technical purposes, and other technical purposes and advantages of the present disclosure that are not mentioned may be understood by a following description, and will be more clearly understood by embodiments of the present disclosure. In addition, it will be readily seen that the technical purposes and advantages of the present disclosure may be realized by means indicated in the claims and combinations thereof.

### [Technical Solution]

A dishwasher according to an embodiment of the present disclosure includes a tub having a washing space defined therein, wherein the washing space accommodates therein dishes and has an open front surface; a dish rack constructed to extend from or retract into the washing space, wherein the dishes are placed in the dish rack; a guide rail disposed in the washing space and constructed to support the dish rack such that the dish rack extends from or retract into the tub; and a lighting device having a light-emitting surface emitting visible light toward the washing space, wherein the lighting device may be installed on an inner side surface of the tub, wherein the light-emitting surface extends linearly from one end edge thereof toward the other end edge thereof.

Furthermore, the one end edge may be an upper end edge of the light-emitting surface, wherein the other end edge may be a lower end edge of the light-emitting surface.

Furthermore, a spacing between the upper end edge and the lower end edge may be maintained to be constant as the light-emitting surface extends from a front end edge of the light-emitting surface toward a rear end edge of the light-emitting surface.

Furthermore, a spacing between the front end edge and the rear end edge may be maintained to be constant as the light-emitting surface extends from the upper end edge toward the lower end edge.

Furthermore, the tub may include: an upper tub constituting an upper surface of the tub; a bottom tub constituting a lower surface of the tub; and a middle tub disposed between the upper tub and the bottom tub and coupled to the upper tub and the bottom tub, wherein the upper end edge may be disposed at a vertical position lower than a vertical position of a bonding portion between the upper tub and the middle tub.

Furthermore, the guide rail may include: a top rail disposed at an uppermost level in a vertical direction; a lower rail disposed at a lowermost level in the vertical direction; and an upper rail disposed between the top rail and the lower rail in the vertical direction, wherein the upper end edge may be disposed between the bonding portion and the upper rail in the vertical direction and may be closer to the bonding portion than to the upper rail.

Furthermore, the guide rail may include: a top rail disposed at an uppermost level in a vertical direction; a lower rail disposed at a lowermost level in the vertical direction; and an upper rail disposed between the top rail and the lower rail in the vertical direction, wherein the lower end edge may be disposed between the upper rail and the lower rail in the vertical direction.

Furthermore, the lower end edge may be disposed closer to the lower rail than to the upper rail in the vertical direction.

Furthermore, the guide rail may include: a top rail disposed at an uppermost level in a vertical direction; a lower rail disposed at a lowermost level in the vertical direction; and an upper rail disposed between the top rail and the lower rail in the vertical direction, wherein the front end edge of the light-emitting surface may be disposed further rearwardly beyond a front end of the lower rail in a front-rear direction.

Furthermore, the front end edge of the light-emitting surface may be disposed further in a frontward direction beyond a front end of the upper rail in the front-rear direction.

Furthermore, the lighting device may be fixed to an inner side surface of at least one of a left side portion or a right side portion of the tub.

Furthermore, an opening extends through at least one of the left side portion or the right side portion of the tub such that an inner space of the tub and an outside out of the tub communicate with each other through the opening, wherein the lighting device passes through the opening and may be disposed in the tub so as to have a portion disposed in the inner space of the tub and a portion disposed in the outside out of the tub.

Furthermore, the lighting device may include: a light source unit configured to generate the visible light; a light guide plate constructed to change a travel path of the visible light generated from the light source unit; a housing having first and second accommodation spaces defined therein, wherein the first accommodation space accommodates the light guide plate therein and the second accommodation space accommodates the light source unit therein; and a cover including a diffusion plate constituting the light-emitting surface and configured to diffuse the visible light introduced thereto through the light guide plate toward the light-emitting surface, wherein the cover may be coupled to the housing to close the first accommodation space, wherein the housing may include an insert portion protruding from one side surface of the housing toward the inner side surface of the tub, wherein the insert portion passes through the opening and extends to the outside out of the tub, wherein an entirety of the housing except for the insert portion may be disposed in the inner space of the tub.

Furthermore, the insert portion may fix the lighting device to the tub.

Furthermore, the second accommodation space may be defined in the insert portion, wherein the light source unit passes through the insert portion and the opening such that one end of the light source unit may be disposed in the outside out of the tub.

A dishwasher according to another embodiment of the present disclosure includes a tub having a washing space defined therein, wherein the washing space accommodates therein dishes and has an open front surface; a dish rack constructed to extend from or retract into the washing space, wherein the dishes are placed in the dish rack; a guide rail disposed in the washing space and constructed to support the dish rack such that the dish rack extends from or retract into the tub; and a lighting device having a light-emitting surface emitting visible light toward the washing space, wherein the lighting device may be installed on an inner side surface of the tub, wherein the light-emitting surface extends linearly from one end edge thereof toward the other end edge thereof, wherein the one edge is a front end edge of the light-emitting surface, wherein the other end edge is a rear end edge of the light-emitting surface.

Furthermore, the guide rail may include: a top rail disposed at an uppermost level in a vertical direction; a lower rail disposed at a lowermost level in the vertical direction; and an upper rail disposed between the top rail and the lower rail in the vertical direction, wherein the front end edge may be disposed further rearwardly beyond a front end of the lower rail in a front-rear direction.

Furthermore, the front end edge may be disposed further rearwardly beyond a front end of the upper rail in the front-rear direction.

Furthermore, the light-emitting surface may include a first light-emitting surface and a second light-emitting surface spaced apart from each other in the vertical direction.

Furthermore, the first light-emitting surface may be disposed between the lower rail and the upper rail in the vertical direction, wherein the second light-emitting surface may be disposed between the upper rail and the top rail in the vertical direction.

### [Advantageous Effects]

The dishwasher according to the present disclosure includes the lighting device having the light-emitting surface having a rod shape of which a longitudinal width is much larger than a transverse width, wherein the light-emitting surface of the lighting device is positioned to be as close to an open front surface of the tub as possible, thereby improving visibility and luminous efficiency of dishes placed inside the tub.

In addition, in the dishwasher according to the present disclosure, the light-emitting surface is positioned to be as close as possible to a front surface of the tub, and the lighting device and the light-emitting surface are positioned at a position at which interference thereof with other components constituting the dishwasher may be minimized, thereby maximizing space utilization.

In addition, in the dishwasher according to the present disclosure, the lighting device is entirely disposed inside the tub, thereby minimizing the size of the opening, effectively preventing decrease in the rigidity of the tub, and remarkably reducing a possibility of water leakage.

In addition to the above-described effects, specific effects of the present disclosure will be described together while describing specific matters for implementing the present disclosure.

### [Description of Drawings]

FIG. 1 is a front perspective view of a dishwasher according to an embodiment of the present disclosure.
FIG. 2 is a schematic cross-sectional view of the dishwasher as shown in FIG. 1.
FIG. 3 is a front perspective view illustrating a state in which a door of the dishwasher illustrated in FIG. 1 is opened.
FIG. 4 is a rear perspective view of the door of the dishwasher as shown in FIG. 1.
FIG. 5 is a partially enlarged view of FIG. 3.
FIG. 6 is a partially enlarged view of FIG. 3 and is a diagram illustrating an arrangement position of a lower end of a light-emitting surface of a lighting device according to a first embodiment of the present disclosure.
FIG. 7 is a partially enlarged view of FIG. 3 and is a diagram for illustrating an arrangement position of an upper end of a light-emitting surface of a lighting device according to a first embodiment of the present disclosure.
FIG. 8 is an exploded perspective view of a lighting device according to a first embodiment of the present disclosure.
FIG. 9 is a vertical cross-sectional view illustrating a state in which the lighting device illustrated in FIG. 8 has been installed in a tub.
FIG. 10 and FIG. 11 are front perspective views showing a process in which the lighting device as shown in FIG. 8 is attached to a left side surface of the tub.
FIG. 12 is a partially enlarged view of a dishwasher for illustrating an arrangement state of a lighting device according to a first embodiment of the present disclosure.

### [Best Mode]

The above-mentioned purpose, features and advantages are described in detail below with reference to the attached drawings. Accordingly, a person skilled in the art in the technical field to which the present disclosure belongs will be able to easily implement the technical idea of the present disclosure. In describing the present disclosure, when it is determined that a detailed description of the known technology related to the present disclosure may unnecessarily obscure the gist of the present disclosure, the detailed description thereof is omitted. Hereinafter, preferred embodiments according to the present disclosure will be described in detail with reference to the attached drawings. In the drawings, identical reference numerals are used to indicate identical or similar components.

It will be understood that, although the terms "first", "second", "third", and so on may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the spirit and scope of the present disclosure.

The terminology used herein is directed to the purpose of describing particular embodiments only and is not intended to be limiting of the present disclosure. As used herein, the singular constitutes "a" and "an" are intended to include the plural constitutes as well, unless the context clearly indicates otherwise.

It will also be understood that when a first element or layer is referred to as being present "on" a second element or layer, the first element may be disposed directly on the second element or may be disposed indirectly on the second element with a third element or layer being disposed between the first and second elements or layers. It will also be understood that when a first element or layer is referred to as being present "under" a second element or layer, the first element may be disposed directly under the second element or may be disposed indirectly under the second element with a third element or layer being disposed between the first and second elements or layers.

It will be understood that when an element or layer is referred to as being "connected to", or "coupled to" another element or layer, it may be directly connected to or coupled to another element or layer, or one or more intervening elements or layers therebetween may be present. In addition, it will also be understood that when an element or layer is referred to as being "between" two elements or layers, it may be the only element or layer between the two elements or layers, or one or more intervening elements or layers therebetween may also be present.

It will be further understood that the terms "comprise", "comprising", "include", and "including" when used in this specification, specify the presence of the stated features, integers, operations, elements, and/or components, but do not preclude the presence or addition of one or more other features, integers, operations, elements, components, and/or portions thereof.

As used herein, the term "and/or" includes any and all combinations of one or more of associated listed items. Expression such as "at least one of" when preceding a list of elements may modify the entire list of elements and may not modify the individual elements of the list. In interpretation of numerical values, an error or tolerance therein may occur even when there is no explicit description thereof.

As used herein, "A and/or B" means A, B or A and B, unless specifically stated otherwise. Expression such as "at least one of" when preceding a list of elements may modify the entirety of list of elements and may not modify the individual elements of the list. As used herein, "C to D" means C inclusive to D inclusive unless otherwise specified.

Hereinafter, the present disclosure will be described with reference to drawings showing a configuration according to an embodiment of the present disclosure.

### [Overall structure of dishwasher]

Hereinafter, an overall structure of a dishwasher 1 according to the present disclosure will be described in detail with reference to the attached drawings.

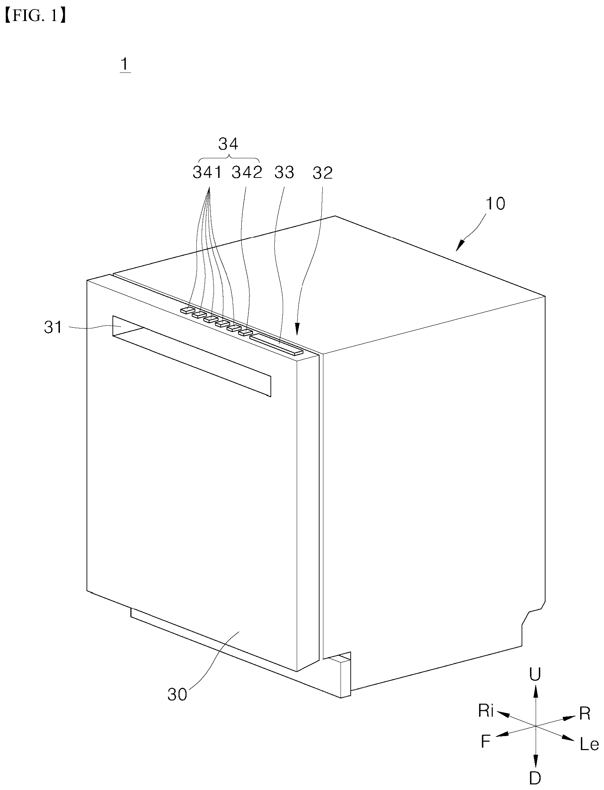

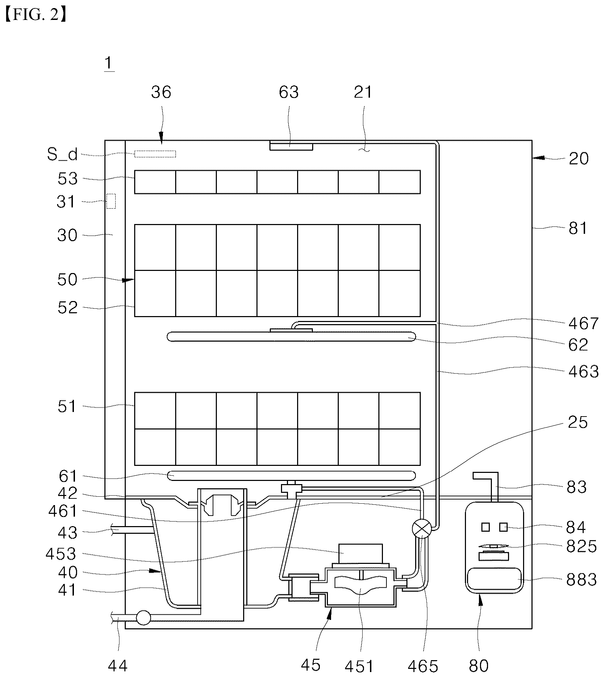

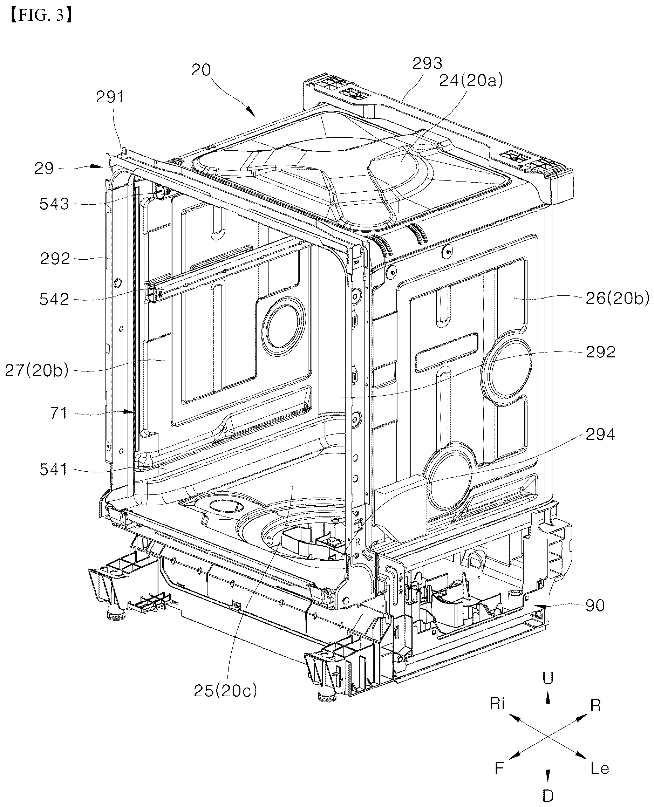

FIG. 1 is a front perspective view showing the dishwasher 1 according to the present disclosure. FIG. 2 is a simplified cross-sectional view briefly showing an internal structure of the dishwasher 1 according to the present disclosure. FIG. 3 is a front perspective view showing the dishwasher 1 in a state in which a door 30 is opened.

As shown in FIG. 1 to FIG. 3, the dishwasher 1 according to the present disclosure may include a casing 10 that constitutes an exterior appearance; a tub 20 installed in an inner space of the casing 10 and having a washing space 21 and 21a defined therein where the washing target is washed, wherein a front surface of the tub is open; a door 30 that opens/closes the open front surface of the tub 20; a driver 40 located under the tub 20 to supply, collect, circulate, and discharge the washing water for washing the washing target; a dish rack 50 removably provided in the inner washing space 21 and 21a of the tub 20 to receive therein the washing target; and a water sprayer installed adjacent to the dish rack 50 to spray the washing water for washing the washing target thereto.

In this regard, the washing target received in the dish rack 50 may be, for example, dishes such as bowls, plates, spoons, and chopsticks, and other cooking utensils. Hereinafter, unless otherwise specified, the washing target will be referred to as a dish.

First, the tub 20 may be formed in a box shape with an entirely open front surface, and have a configuration of a so-referred to as washing tub.

The washing space 21 and 21a may be defined inside the tub 20. The open front surface 22 of the tub 20 may be opened/closing by the door 30.

The tub 20 may be formed via pressing of a metal plate resistant to high temperature and moisture, for example, a stainless steel plate.

Moreover, on an inner surface of the tub 20, a plurality of brackets may be disposed for the purpose of supporting and installing functional components such as the dish rack 50 and the water sprayer which will be described later thereon within the tub 20.

In one example, the driver 40 may include a sump 41 that stores therein washing water, a sump cover 42 that distinguishes the sump 41 from the tub 20, a water supply 43 that supplies washing water from an external source to the sump 41, a water discharger 44 that discharges the washing water of the sump 41 to an outside, and a washing pump 45 and a supply flow path 46 that supply the washing water of the sump 41 to the water sprayer. The sump cover 42 may be disposed at a top of the sump 41 and may serve to distinguish the tub 20 and the sump 41 from each other.

Moreover, the sump cover 42 may have a plurality of collecting holes defined therein for collecting washing water sprayed into the washing space 21 and 21a through the water sprayer into the sump 41.

That is, the washing water sprayed from the water sprayer toward the dish may fall down to a bottom of the washing space 21 and 21a, and may be collected again through the sump cover 42 and into the sump 41.

The washing pump 45 may be disposed at one side of the sump 41 and may serve to pressurize the washing water and supply the pressurized washing water to the water sprayer.

One end of the washing pump 45 may be connected to the sump 41 and the other end thereof may be connected to the supply flow path 46. The washing pump 45 may be equipped with an impeller 451 and a motor 453. When power is supplied to the motor 453, the impeller 451 may rotate, and thus the washing water in the sump 41 may be pressurized, and then may be supplied to the water sprayer through the supply flow path 46.

Although not shown, a wash water heater may be provided in the washing pump 45 to heat the wash water supplied during a wash cycle or a heat rinse cycle.

In one example, the supply flow path 46 may serve to selectively supply the washing water supplied from the washing pump 45 to the water sprayer.

For example, the supply flow path 46 may include a first supply flow path 461 connected to a lower spraying arm 61, and a second supply flow path 463 connected to an upper spraying arm 62 and a top nozzle 63. The supply flow path 46 may be provided with a supply flow path switching valve 465 that selectively opens/closes the supply flow paths 461 and 463.

In this regard, the supply flow path switching valve 465 may be controlled so that the supply flow paths 461 and 463 are opened sequentially or simultaneously.

In one example, the water sprayer may be constructed to spray the washing water to the dishes stored in the dish rack 50.

More specifically, the water sprayer may include the lower spraying arm 61 located under the tub 20 to spray the washing water to a lower rack 51. Further, the water sprayer may include the upper spraying arm 62 located between the lower rack 51 and an upper rack 52 to spray the washing water to the lower rack 51 and the upper rack 52. Further, the water sprayer may include the top nozzle 63 located on top of the tub 20 to spray the washing water to a top rack 53 or the upper rack 52.

In particular, the lower spraying arm 61 and the upper spraying arm 62 may be rotatably disposed in the washing space 21 and 21a of the tub 20 and may spray the washing water toward the dish of the dish rack 50 while being rotating.

The lower spraying arm 61 may be rotatably supported on a top of the sump cover 42 so as to spray the washing water toward the lower rack 51 while being rotating and being disposed under the lower rack 51.

Moreover, the upper spraying arm 62 may be rotatably supported by a spraying arm holder 467 so as to spray the washing water on the dish while being rotating and being disposed between the lower rack 51 and the upper rack 52.

In one example, although not shown, in order to increase washing efficiency, additional means for diverting the washing water sprayed from the lower spraying arm 61 into an upward direction (diverting in a U-direction) may be provided at a lower wall 25 of the tub 20.

A detailed configuration of the water sprayer has been already known in the art. Thus, a description of the specific configuration of the water sprayer will be omitted below.

The dish rack 50 for storing the dish therein may be disposed in the washing space 21 and 21a.

The dish rack 50 may be constructed to extend or retract from or into the inner space of the tub 20 through the open front surface of the tub 20.

For example, in FIG. 2, an embodiment is shown in which the dish rack 50 includes the lower rack 51 located at a lower portion of the tub 20 to accommodate therein relatively large dishes, the upper rack 5 located on top of the lower rack 51 to accommodate therein medium-sized dishes, and the top rack 53 located at a top level of the tub 20 and capable of storing therein small dishes, etc. However, embodiments of present disclosure are not limited thereto. However, hereinafter, an example in which the dishwasher 1 includes the three dish racks 50 as shown is described.

Each of the lower rack 51, the upper rack 52, and the top rack 53 may be constructed to extend or retract from or into the inner space of the tub 20 through the open front surface of the tub 20.

For this purpose, guide rails 54 may be respectively disposed on both opposing inner side surfaces constituting an inner surface of the tub 20. As described below, by way of example, the guide rails may include an upper rail 542, a lower rail 541, and a top rail 543.

Wheels may be disposed on a bottom of each of the lower rack 51, the upper rack 52, and the top rack 53. The user may extend the lower rack 51, the upper rack 52, and the top rack 53 from the inner space of the tub 20 through the open front surface of the tub 20 and may place the dishes thereon, or easily withdraw the dishes that have been washed out thereof.

The guide rail (not shown) may be embodied as a simple rail-type fixed guide rail to guide the extending or the retracting of the rack 50, or a telescopic guide rail capable of guiding the extending or the retracting of the rack 50 and at the same time, increasing an extension distance thereof as the rack 50 further extends from the inner space of the tub. In one example, the lower rail 541 may be provided as the fixed guide rail, while each of the top rail 543 and the upper rail 542 may be provided as the telescopic guide rail.

In one example, the door 30 is configured for opening/closing the open front surface 22 of the tub 20 as described above.

A hinge (not shown) around which the door 30 is closed or opened may be provided at a bottom of the open front surface. Thus, the door 30 may pivot around the hinge as a pivot axis.

In this regard, a handle 31 for opening the door 30 and a control panel 32 for controlling an operation of the dishwasher 1 may be disposed on an outer side surface of the door 30.

As shown, the control panel 32 may include a display 33 that visually displays information regarding a current operating status of the dishwasher 1, etc. Further, the control panel 32 may include a button unit 34 including a selection button through which a user's course selection manipulation is input and a power button through which a user's manipulation for turning the dishwasher on and off is input.

In one example, a rear panel 30b constituting an inner side surface of the door 30 may constitute one surface of the tub 20 when the door 30 has been closed, and may constitute a seat surface on which the lower rack 51 of the dish rack 50 is supported when the door 30 is fully opened.

For this purpose, when the door 30 is fully opened downwardly, the rear panel 30b of the door 30 may constitute a horizontal plane extending in the same direction as a direction in which the guide rail 54 guiding the displacement of the lower rack 51 extends.

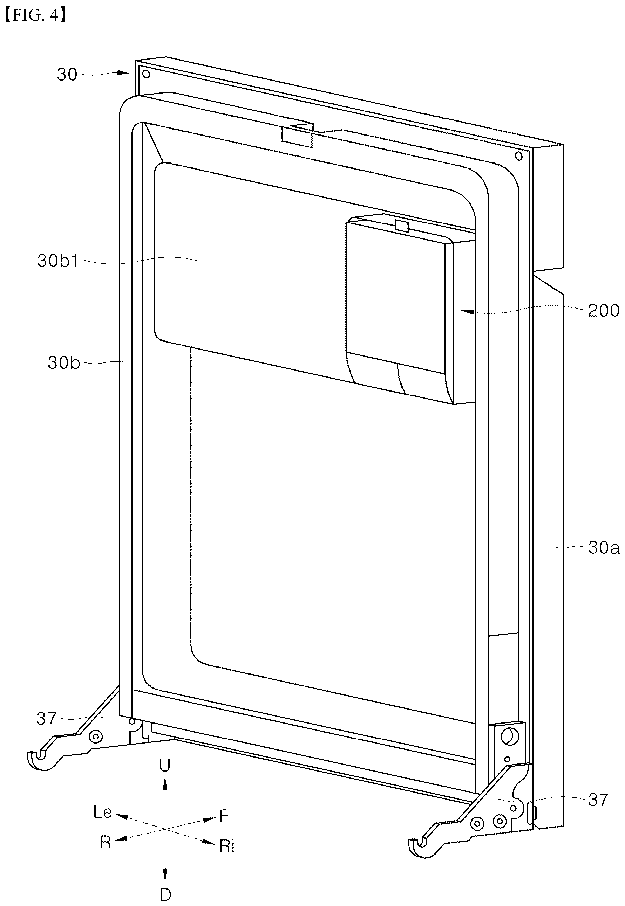

As shown in FIG. 4, a detergent supply device 200 for automatically supplying detergent into the inside of the tub 20 may be further installed on the rear panel 30b constituting an inner side surface of the door 30.

Furthermore, a door position sensor 36 may be disposed on an outer top surface of the tub 20 and may be configured to detect whether the door 30 is in a closed or open state. For example, the door position sensor 36 may include a door position sensor S_d or a latch sensor that detects a position of a door latch (not shown).

In one example, a drying air supply 80 may be disposed under the tub 20 and may be configured to generate and supply high-temperature or low-temperature drying air to the washing space inside the tub 20.

As shown, the drying air supply 80 may be configured to include a filter member 883 for filtering outside air, a blower fan 825 for generating a drying air stream, a heater 84 for heating the drying air stream, and an air stream guide 83 disposed inside the tub 20 so as to guide the drying air stream.

Thus, the high-temperature drying air or low-temperature drying air may be supplied from the drying air supply 80 into the inside of the tub 20 during the drying cycle S5 such that the drying efficiency and sterilization effect on the dishes may be significantly improved compared to a conventional dishwasher.

In one example, the dishwasher may be configured such that a portion of the air current supplied to the inside of the tub 20 and moistened while drying the dishes may be discharged to the outside and a remaining portion thereof may be suctioned into the drying air supply 80. The discharge of the air current may be accomplished via partial opening of the door 30 or via a separate air discharge means (not shown).

In addition, a lighting device 71 may be further disposed inside the tub 20 as a means for illuminating the washing space 21 and 21a by irradiating visible light thereto.

The lighting device 71 may be disposed on at least one of a right side portion 27 and a left side portion 26 constituting an inner side surface of the tub 20 so as to effectively illuminate the washing spaces 21 and 21a.

Even in a situation in which the above-described dish rack 50 has not been extended out of the tub 20, the user may effectively check a stored state, a washed state, and the like of the dishes accommodated in the dish rack 50 through the lighting device 71.

In order to minimize power consumption, the lighting device 71 may be turned on upon receiving power only when it is identified using the door position sensor 36 that the door 30 is opened.

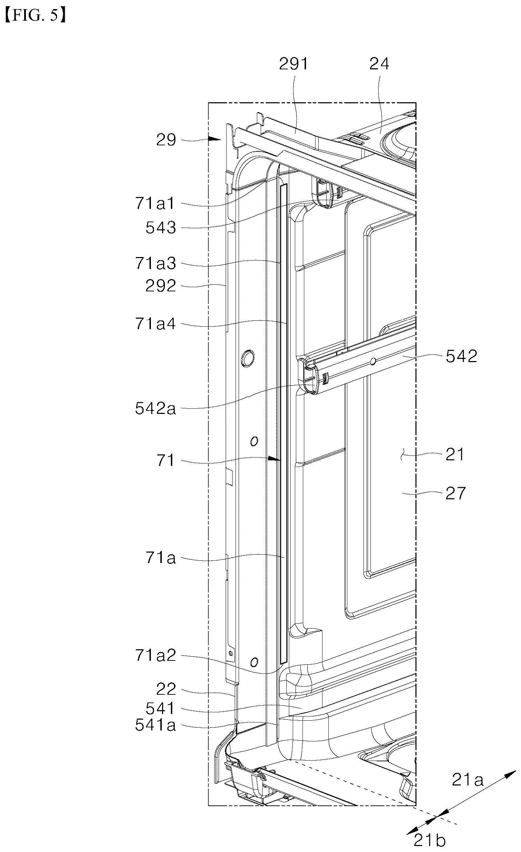

A detailed configuration of each of embodiments of the lighting device 71 will be described later with reference to FIG. 5 or subsequent drawings thereto.

### [Detailed Configuration of Lighting Device According to First Embodiment]

Hereinafter, the lighting device 71 according to a first embodiment of the present disclosure will be described with reference to FIGS. 5 to 11.

First, referring to FIG. 5, the lighting device 71 according to the first embodiment of the present disclosure may be disposed to be fixed to at least one of the left side portion 26 or the right side portion 27 of the tub 20.

More specifically, as shown, the lighting device 71 for illuminating the interior of the tub 20 may be disposed at a position as close as possible to the open front surface 22 of the tub 20 on an inner side surface of each of the left side portion 26 and the right side portion 27 of the tub 20.

In this regard, the lighting device 71 according to the first embodiment of the present disclosure may be provided as a pair of lighting devices having the same size and outer appearance and disposed on an inner side surface of the left side portion 26 of the tub 20 and an inner side surface of the right side portion 27 of the tub 20, respectively.

As described above, only one pair of lighting devices 71 is provided, such that the number of lighting devices 71 may be minimized. As described below, the number of openings to be formed in the left side portion 26 and the right side portion 27 of the tub 20 may be minimized.

In order to increase the lighting efficiency of the dishes mounted in the washing space 21 and 21a of the tub 20 and minimize interference with the second supply flow path 463, the pair of lighting devices 71 may be respectively disposed at positions symmetrical with each other about a vertical surface dividing the tub 20 in the left-right direction.

In one example, the pair of lighting devices 71 may be formed to have the same shape and size only with different positions thereof.

Therefore, hereinafter, the lighting device 71 disposed on the left side portion 26 of the tub 20 will be mainly described. Unless otherwise described, the contents as described below may be equally applied to the lighting device 71 disposed on the right side portion 27 of the tub 20.

As shown in FIG. 5, the lighting device 71 according to the first embodiment of the present disclosure is configured to illuminate the inside of the tub 20 in a surface light-emission manner.

In this regard, in order to effectively illuminate the inside of the tub 20, a light-emitting surface 71a of the lighting device 71 may be disposed at a position as close as possible to the front surface 22 of the tub 20 and may be formed to extend linearly in a vertical direction from one end edge toward the other end edge.

When the light-emitting surface 71a is formed to extend linearly in the vertical direction as described above, one end edge of the light-emitting surface 71a may be an upper end edge 71a1, and the other end edge of the light-emitting surface 71a may be a lower end edge 71a2.

As illustrated, the light-emitting surface 71a of the lighting device 71 may be formed in an approximately rectangular shape, and more specifically, may be formed in a rod shape in which a vertical width is much greater than a horizontal width. That is, the vertical direction may be the longitudinal direction of the light-emitting surface 71a.

In one example, a ratio of the vertical width to the horizontal width may be set to be in a range of 20:1 to 30:1.

In this regard, as illustrated, the light-emitting surface 71a of the lighting device 71 may be constructed such that a spacing between the upper end edge 71a1 and the lower end edge 71a2 is maintained to be constant as the light-emitting surface 71a extends from a front end edge 71a3 toward a rear end edge 71a4, and a spacing between the front end edge 71a3 and the rear end edge 71a4 is maintained to be constant as the light-emitting surface 71a extends from the upper end edge 71a1 toward the lower end edge 71a2.

Accordingly, in the lighting device 71 according to the first embodiment of the present disclosure, visible light having a uniform amount of light along the vertical direction may be continuously irradiated toward the dishes disposed inside the tub 20.

In one example, as shown in FIG. 5, the upper end edge 71a1 of the light-emitting surface 71a having the rectangular shape may be positioned at a higher vertical level than a vertical level of the upper rail 542 in the vertical direction, and preferably, may be positioned between the upper rail 542 and an upper bonding portion 20d formed by bonding an upper tub 20a and a middle tub 20b constituting the tub 20 to each other and be positioned closer to the upper bonding portion 20d than to the upper rail.

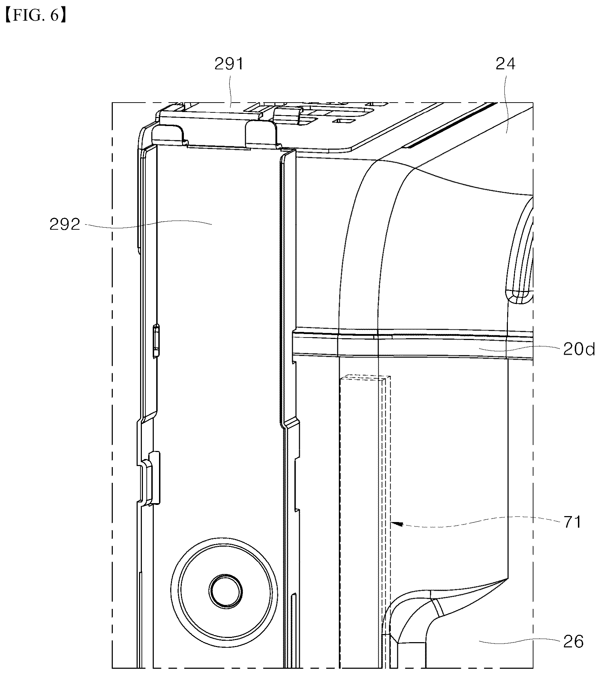

More specifically, as shown in FIGS. 5 and 6, the tub 20 defining the washing space 21 and 21a of the dishwasher 1 may be composed of a plurality of parts.

By way of example, the tub 20 may be composed of three parts.

When the tub 20 includes the three parts, the tub 20 may include the upper tub 20a defining an upper surface 24 of the tub 20, a bottom tub 20c defining a lower surface 25 of the tub 20, and the middle tub 20b disposed between the upper tub 20a and the bottom tub 20c and coupled thereto. The mid-tub 20 may define a left side portion 26, a right side portion 27, and a rear surface 23 of the tub 20.

The upper tub 20a defining the upper surface 24 of the tub 20 may be formed by pressing a metal plate, preferably a stainless steel plate, having predetermined heat resistance and corrosion resistance.

In this regard, both opposing side edges and a rear edge of the upper tub 20a coupled to the middle tub 20b may be formed as curved surfaces having a predetermined curvature.

In addition, the upper tub 20a defines an upper end edge of the open front surface 22 of the tub 20. As shown in FIG. 4, the open front surface 22 of the tub 20 may have relatively weak strength, and thus may be easily deformed by an external force. In order to prevent such deformation, an upward extension surface extending in a flange shape may be provided at the front edge of the upper tub 20a defining the upper end edge of the front surface 22.

Like the upper tub 20a, the bottom tub 20c defining the lower surface 25 of the tub 20 may be formed by pressing a metal plate having predetermined heat resistance and corrosion resistance, preferably, a stainless steel plate.

In this regard, both opposing side edges and a rear edge of the bottom tub 20c coupled to the middle tub 20b may be formed as curved surfaces having a predetermined curvature.

In addition, a sump hole into which the sump in which washing water is stored is mounted may be formed in a central area of the bottom tub 20c, and a seated surface on which the lower rack 51 is seated and supported may be formed in a side surface of the bottom tub.

As shown in FIG. 3, the base 90 having a predetermined accommodation space therein may be coupled to a lower side of the bottom tub 20c.

Like the upper tub 20a and the bottom tub 20c, the middle tub 20b defining the left and right side portions 26 and 27 and the rear surface 23 of the tub may be formed by pressing a metal plate having predetermined heat resistance and corrosion resistance, preferably a stainless steel plate.

As shown, both opposing side edges and the rear edge of the upper tub 20a may be coupled to an upper end edge of the middle tub 20b.

In addition, both opposing side edges and the rear edge of the bottom tub 20c may be coupled to a lower end edge of the middle tub 20b.

In this regard, in order to prevent leakage of the washing water between the parts of the tub and to firmly couple the parts of the tub to each other, the upper tub 20a and the middle tub 20b, and the middle tub 20b and the bottom tub 20c may be coupled to each other by welding, for example, by seam welding.

In this regard, as known in the art, the seam welding is a kind of electrical resistance welding, and refers to continuous spot welding with a roller-shaped electrode, and is a welding scheme generally used for a joint requiring airtightness and watertightness.

When the tub 20 are divided into the three parts, that is, the upper tub 20a, the middle tub 20b, and the bottom tub 20c, and the seam welding method is used, a welding line is formed on the same plane. Therefore, a work time required for the welding process may be reduced compared to other welding schemes.

In particular, as shown in FIG. 6, the upper bonding portion 20d formed at a portion where the upper tub 20 and the middle tub 20 are bonded to each other using the seam welding may be formed. A position of the upper end edge 71a1 of the light-emitting surface 71d of the lighting device 71 may be set so that interference thereof with the upper bonding portion 20a does not occur, and the upper end edge 71a1 of the light-emitting surface 71d is positioned at a lower vertical level of than a vertical level of the upper bonding portion 20a as an upper limit point to which the light-emitting surface 71 may linearly extend upwardly.

In one example, the lower end edge 71a2 of the light-emitting surface 71a may be positioned at a vertical position between the upper rail 542 and the lower rail 541 in the vertical direction, and preferably may be positioned closer to the lower rail 541 than to the upper rail 542.

Accordingly, the lower end edge 71a2 of the light-emitting surface 71a may extend to a vertical position lower than a vertical position of an upper end of the lower rack 51 that is supported on the lower rail 541 so as to extend from or retract into the washing space.

In one example, as described above, the light-emitting surface 71a of the lighting device 71 may be disposed at a position as close as possible to the open front surface 22 of the tub 20, unlike the related art.

As described above, the open front surface 22 of the tub 20 is closed by the rear panel 30b of the door 30.

As illustrated in FIG. 4, the rear panel 30b of the door 30 may include a rearwardly-protruding surface 30b1 formed to be convex toward the tub 20 so as to more effectively seal the open front surface 22 of the tub 20.

When the door 30 is closed while the rearwardly-protruding surface 30b1 of the rear panel 30b passes through the open front surface 22 of the tub 20 and enters the inside of the tub 20, the open front surface 22 of the tub 20 may be effectively sealed.

In order to facilitate the entry of the rear panel 30b of the door 30, a door coupling space 21b may be formed in a front area of the inner space 21 of the tub 20.

The door coupling space 21b may have further expanded in a frontward direction beyond the washing space 21a so as to have a larger cross-sectional area than that of the washing space 21a as an area of the inner space 21 of the tub 20 in rear of the door coupling space 21b.

Although not shown, a door gasket for improving sealing performance between the rear panel 30b of the door 30 and the tub 20 may be provided at a rear end of the door coupling space 21b.

As described above, in consideration of the spatial limitation of the space into which the rear panel 30b of the door 30 is inserted, the light-emitting surface 71a of the lighting device 71 may be disposed at the front edge side of the washing space 21a at which the washing space 21a starts to extend and which is positioned immediately in rear of the door gasket.

More specifically, as illustrated in FIG. 5, a front end of the lower rail 541 may be positioned at the starting point of the washing space 21a, and the lower rail 541 may linearly extend from the front end thereof toward the rear surface 23 of the tub 20.

Accordingly, the lower end edge 71a2 of the light-emitting surface 71a of the lighting device 71 may be disposed on top of the lower rail 541 in the vertical direction while avoiding interfering with the lower rail 541, while the front end edge 71a3 of the light-emitting surface 71a of the lighting device 71 may be disposed in rear of the front end of the lower rail 541 based on the front-rear direction.

In addition, the front end edge 71a3 of the light-emitting surface 71a of the lighting device 71 may be disposed in rear of the door gasket area into which the rear panel 30b of the door 30 is inserted in the front-rear direction so as to avoid interference with the rear panel 30b of the door 30.

In this regard, as illustrated in FIG. 5, the front end of the upper rail 542 may be disposed in rear of the front end of the lower rail 541 in the front-rear direction.

Accordingly, the front end edge 71a3 of the light-emitting surface 71a of the lighting device 71 may be disposed in front of the front end of the upper rail 542 and an upper rail bracket (not shown) that supports the upper rail 542 to extend from or retract into the tub 20 based on the front-rear direction.

That is, the front end edge 71a3 of the light-emitting surface 71a may be disposed between the front end of the upper rail 542 and the front end of the lower rail 541 based on the front-rear direction, and accordingly, a portion of the light-emitting surface 71a of the lighting device 71 screened with the upper rail 542 and the upper rack 52 may be minimized, and the light-emitting efficiency of the lighting device 71 may be improved.

In one example, the rear end edge 71a4 of the light-emitting surface 71a of the lighting device 71 may be located at the same position as that of the front end of the upper rail 542 or be positioned further rearwardly beyond the upper rail 542 based on the front-rear direction.

In addition, the light-emitting surface 71a of the lighting device 71 according to the first embodiment of the present disclosure is disposed in the tub 20 and extends linearly in a direction intersecting the extension direction of the upper rail 542, that is, in the vertical direction. In addition, as described above, the upper rail 542 may be provided as the telescopic rail to support the upper rack 52 so as to extend from the tub or retract into the tub.

Therefore, in order to prevent interference between the upper rack and the lighting device from occurring during the extending and retracting process of the upper rack 52, a thickness in the left-right direction of the portion of the lighting device 71 disposed on the inner side surface of the left side portion 26 of the tub 20 may be set to be smaller than a spacing between the upper rail 542 disposed on the inner side surface of the left side portion 26 of the tub 20 and the inner side surface of the left side portion 26 of the tub 20.

In one example, the open front surface 22 of the door 30 has a relatively low rigidity. For this reason, a reinforcing means in addition to the above-described flange-shaped upward extension surface may be added thereto.

The reinforcing means of the tub 20 may be a tub frame 29 attached to an outer surface of the tub 20 as shown in FIGS. 5 to 7.

More specifically, the tub frame 29 may include a front upper frame 291 adjacent to the open front surface 22 of the tub 20 and attached to the upper surface 24 of the tub 20, a front side frame 292 adjacent to the open front surface 22 of the tub 20 and attached to each of both opposing side portions 26 and 27 of the tub 20, a support frame 294 for fastening the tub 20 and the base 90 to each other, and a rear upper frame 293 adjacent to the rear surface 23 of the tub 20 and attached to the upper surface 24 of the tub 20.

In particular, the front upper frame 291, the front side frames 292, and the support frame 294 may be arranged along an edge of the open front surface 22 of the tub 20 and may be constructed to coupled to the outer surface of the door coupling space 21b described above.

In addition, each of the front upper frame 291, the front side frames 292, and the support frame 294 may be constructed to have a front-rear width corresponding to a front-rear width of the door coupling space 21b.

Therefore, in a view of the outer surface of the tub 20, as illustrated in FIGS. 5 and 6, it is necessary for the lighting device to be positioned at a position at which interference between the lighting device and each of the front side frame 292 and the support frame 294 does not occur.

That is, as illustrated, the lighting device 71 according to the first embodiment of the present disclosure and the light-emitting surface 71a of the lighting device 71 may be disposed closer to the front side frame 292 and the support frame 294 and be positioned further rearwardly beyond the front side frame 292 and the support frame 294 in the front-rear direction.

In addition, as described below, the lighting device 71 according to the first embodiment may pass through an opening 261 of the tub 20 and be disposed in the tub 20 such that the lighting device 71 has a portion positioned out of the tub 20 and a portion positioned inside the tub 20.

That is, only some of components of the lighting device 71 may be disposed inside the tub 20. The opening may be formed in each of the left side portion 26 and the right side portion 27 of the tub 20 so that a portion of the lighting device 71 may pass therethrough. As illustrated, by way of example, the opening 261 formed in the left side portion 26 may be defined at a position corresponding to a position of the lower end edge of the light-emitting surface 71a and may be formed between the upper end and the lower end of the support frame 294 in the vertical direction.

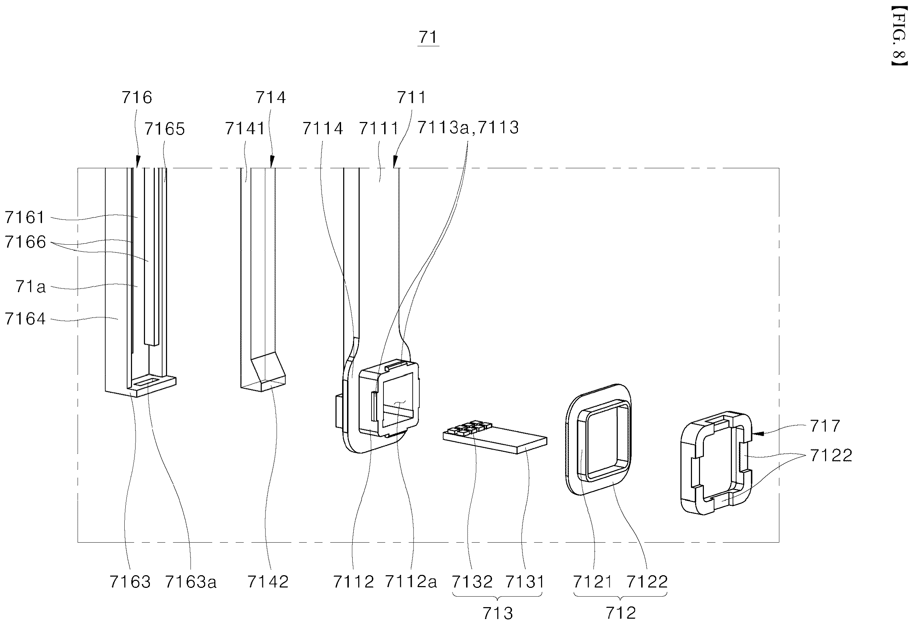

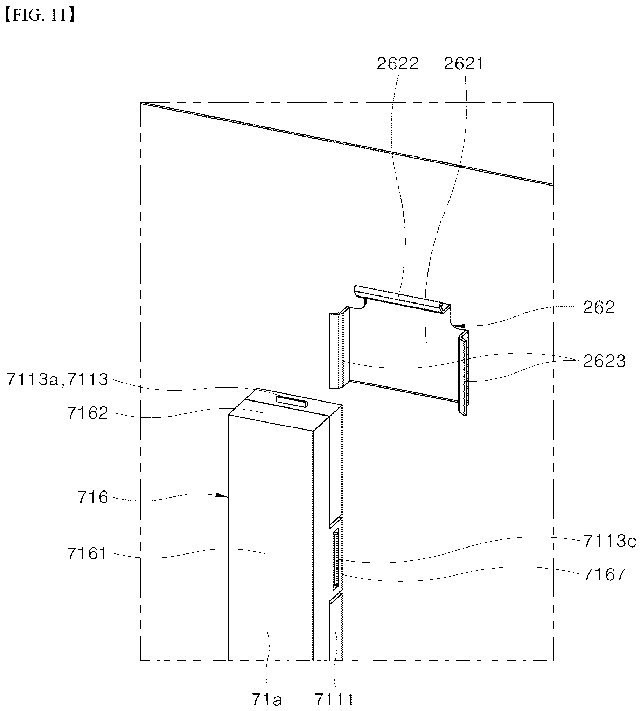

Hereinafter, a detailed configuration of the lighting device 71 disposed entirely inside the tub 20 according to the first embodiment of the present disclosure will be described with reference to FIGS. 8 and 11.

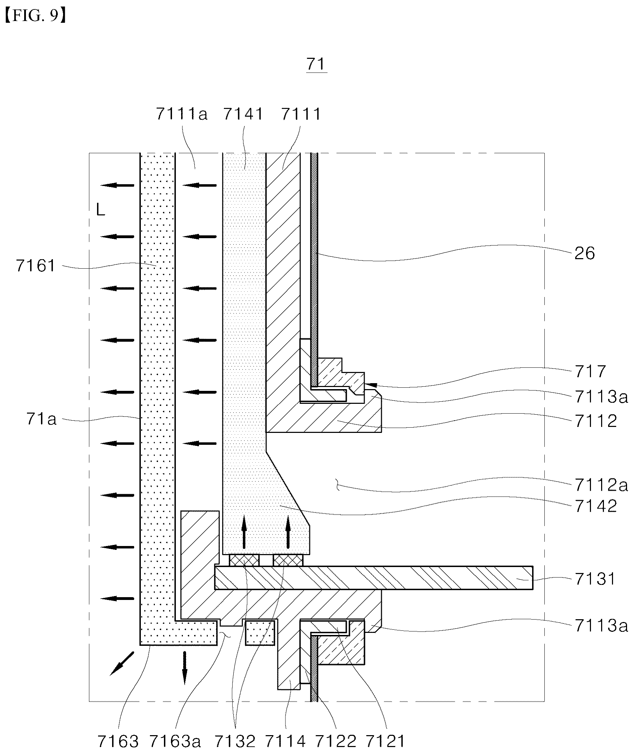

As shown in FIGS. 8 and 9, the lighting device 71 according to the first embodiment of the present disclosure may include a light source unit 713 for generating visible light, a light guide plate 714 for changing a travel path of the visible light L generated from the light source unit 713, a housing 711 for accommodating and supporting the light source unit 713 and the light guide plate 714, a cover 716 coupled to a front side of the housing 711 and including a diffusion plate 7161 constituting a light-emitting surface 71a, and a housing fastening portion 717 for fixing the housing 711 to the tub 20.

The light source unit 713 is partially disposed inside the tub 20 and serves to generate the visible light upon receiving external power.

That is, as shown in FIGS. 8 and 9, the light source unit 713 as the electrical component may pass through the opening 261 formed in the left side portion 26 of the tub 20 and into the inside of the tub so that the influence of the washing water thereon may be minimized. The light source unit 713 may have a portion disposed in the inside of the tub 20 and a portion disposed out of the tub 20.

As will be described later, an insert portion 7112 of the housing 711 may have a second accommodation space 7112a defined therein and having a portion disposed in the inside of the tub 20 and a portion disposed out of the tub 20. The light source unit 713 may be received in the second accommodation space 7112a.

For example, the light source unit 713 may include at least one light source element 7132 and a circuit board 7131 on which the at least one light source element 7132 is mounted.

The light source element 7132 may be applied without limitation thereto as long as it is a means capable of receiving power and generating predetermined visible light, and may be, for example, an LED element.

Hereinafter, an example in which the light source element 7132 is embodied as the LED element will be described. However, the present disclosure is not limited thereto.

As illustrated, in order to minimize a size in the left-right direction of the lighting device 71 and minimize the number of light source elements 7132, the visible light generated from the light source element 7132 may be introduced through a lower end surface of the light guide plate 714 into the inside of the light guide plate 714.

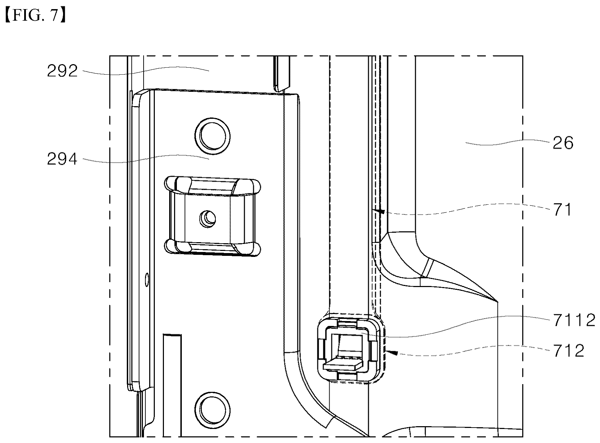

FIGS. 6 and 7 illustrate an example configuration in which the light source elements 7132 are densely arranged only on an area of the circuit board 7131 overlapping the lower end surface of the light guide plate 71 in the vertical direction such that the light source elements 7132 may intensively irradiate the visible light toward the lower end surface of the light guide plate 714.

As described above, the light source elements 7132 are densely arranged only on the area of the circuit board 7131 overlapping the lower end surface of the light guide plate 71 in the vertical direction, such that a size of an area of the circuit board 7131 disposed inside the tub 20 may be minimized, and accordingly, the thickness in the left-right direction of the portion of the lighting device 71 disposed inside the tub 20 may be maintained to be very small.

The light guide plate 714 is disposed outside the tub 20 and serves to change a travel path of the visible light generated from the light source element 7132 such that the light is irradiated toward the diffusion plate 7161 disposed in front thereof.

As described above, the visible light generated from the light source element 7132 may be introduced into the light guide plate 714 through the lower end surface thereof. The visible light introduced into the light guide plate may be reflected therefrom and dispersed therein, such that the travel direction thereof may be changed such that the light travels toward the diffusion plate 7161 to be described later.

As illustrated, in order to maximize an area size of an area of the light guide plate 714 into which the visible light from the light source element 7132 is introduced, and to allow the introduced visible light to be uniformly irradiated toward the diffusion plate 7161, the light guide plate 714 may include an area size-increasing portion 7142 having a cross-sectional area gradually increasing while extending downwardly toward a lower end thereof, and a flat plate portion 7141 continuously upwardly extending from the area size-increasing portion 7142 and having a thickness in the left-right direction substantially constant.

A portion of the light guide plate 714 facing the diffusion plate 7161, that is, a portion thereof excluding the right side surface and the lower end surface thereof based on the illustrated state may be blocked by the housing 711 to be described later. Thus, the visible light passing through the portion may be blocked by the housing. Thus, the visible light may be irradiated to the diffusion plate out of the light guide plate 714 only through the left side surface of the light guide plate 714.

The housing 711 is disposed in a surface contact manner with the inner surface of the tub 20. The light guide plate 714 and the light source unit 713 are received in the housing 711. The housing serves to fix the light guide plate 714 and the light source unit 713 to the tub 20.

To this end, as illustrated in FIG. 8, the housing 711 may include a housing body 7111 that is fixed to and is in close contact with each of inner side surfaces of the left and right side portions 26 and 27 of the tub 20 and has a first accommodation space 7111a defined therein, and the insert portion 7112 that protrudes laterally from the housing body 7111 and has the first accommodation space 7111a.

The housing body 7111 may be provided in a box shape in which one side surface facing the inner space 21 of the tub 20 is opened. One side surface opened based on the state illustrated in FIGS. 8 and 9 may be a right side surface.

The first accommodation space 7111a extending in the vertical direction may be defined in the housing body 7111 and may accommodate therein an entirety of the light guide plate 714.

The insert portion 7112 is integrally formed with the housing body 7111 and protrudes from the left side surface of the housing body 7111 and has a channel-shaped second accommodation space 7112a defined therein in which the above-described light source unit 713 may be accommodated.

To this end, the insert portion 7112 may be disposed on a left side surface of the housing body 7111 and may be formed in a cylindrical shape extending from a lower end of the left side surface of the housing body 7111 toward the left side portion 26 of the tub 20.

Accordingly, the second accommodation space 7112a, one end of which communicates with the first accommodation space 7111a and the other end of which communicates with a space out of the tub 20, may be defined in the insert portion 7112.

As illustrated in FIG. 9, the other end of the insert portion 7112 may pass through the opening 261 of the tub 20 and extend to the outside out of the tub 20. The circuit board 7131 of the light source unit 713 disposed in the second accommodation space 7112a of the insert portion 7112 may pass through the opening 261 of the tub 20 and the insert portion 7112 and extend to the outside out of the tub 20.

That is, each of the circuit board 7131 and the insert portion 7112 may pass through the opening 261 so as to have a portion disposed in the inside of the tub 20 and a portion disposed in the outside out of the tub 20.

Therefore, a portion of the lighting device 71 according to the first embodiment of the present disclosure except for the insert portion 7112 and the circuit board 7131 may be entirely disposed in the inside of the tub 20.

In this regard, the insert portion 7112 may act as a fastening means for fixing the lighting device 71 to the tub 20.

As shown in FIGS. 8 and 9, the insert portion 7112 passes through the opening 261 of the tub 20 such that the other end thereof is disposed in the outside out of the tub 20.

In this regard, the housing fastening portion 717 coupled to the other end of the insert portion 7112 may be disposed outside the tub 20.

The housing fastening portion 717 may be provided in a hollow nut shape so that the other end of the insert portion 7112 may be inserted thereinto.

The inner hollow of the housing fastening portion 717 may have a shape corresponding to an outer shape of the other end of the insert portion 7112 so that the other end of the insert portion 7112 is inserted into and coupled thereto.

When, as illustrated by way of example, the insert portion 7112 is provided in a rectangular cylinder shape, a rectangular hole may be defined in the housing fastening portion 717.

At least one engaging groove 7171 may be concavely recessed in an outer edge of the housing fastening portion 717.

A hook-shaped first hook portion 7113a may be provided at the other end of the insert portion 7112 in a corresponding manner to the at least one engaging groove 7171 of the housing fastening portion 717 so as to be coupled to the engaging groove 717 in a hooked manner. The first hook portion 7113a and a second hook portion 7113b which will be described later constitute a fastening portion 7113 for fixing the housing 711 to the tub 20 or fixing the cover 716.

In the illustrated embodiment, an example is illustrated in which one first hook portion 7113a is disposed on each of four side surfaces of the insert portion 7112 in consideration of the shape of the rectangular cylinder thereof, and four engaging grooves 7171 are provided in a corresponding manner thereto. Hereinafter, the present disclosure will be described based on the example configuration in which the four first hook portions 7113a and the four engaging grooves 7171 are provided as in the illustrated embodiment. However, the present disclosure is not limited thereto.

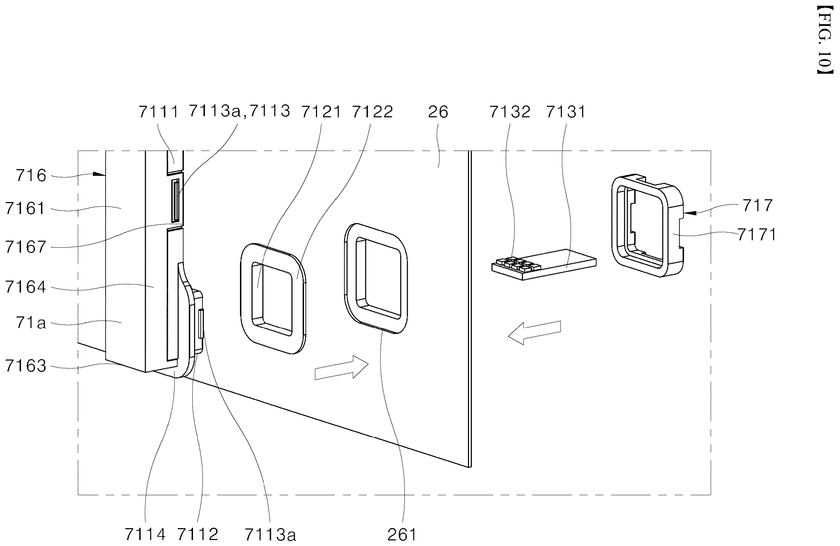

FIG. 10 illustrates a process in which the insert portion 7112 and the first hook portion 7113a are coupled to each other.

When the insert portion 7112 has moved from the inner space of the tub 20 such that the other end of the insert portion 7112 has passed through the opening 261 of the tub 20 and has been positioned out of the tub, the other end of the insert portion 7112 may be spaced apart from an outer side surface of the tub 20 by a predetermined spacing as illustrated in FIG. 9.

As described above, in a state in which the insert portion 7112 has been inserted into the opening 261 of the tub 20, the housing fastening portion 717 may be moved from the outside out of the tub 20 so as to be forcibly fitted with the other end of the insert portion 7112.

As illustrated in FIG. 9, when the first hook portion 7113a of the insert portion 7112 is coupled to the engaging groove 7171 of the housing fastening portion 717 in the hooked manner, the lower end of the housing body 7111 and the insert portion 7112 may be firmly fixed to the left side portion 26 of the tub 20 in a state in which the left side portion 26 of the tub 20 is caught into between the housing body 7111 and the housing fastening portion 717.

In one example, as illustrated, the lighting device 71 according to the first embodiment of the present disclosure may further include a gasket 712a as a means for preventing water leakage through the opening 261 of the tub 20.

By way of example, the gasket 712 may be configured to include a cylindrical portion 7121 coupled to the outer circumferential surface of the insert portion 7112 and a flange portion 7122 integrally connected to an end of an inner surface of the cylindrical portion 7121.

The cylindrical portion 7121 may be coupled to the outer circumferential surface of the insert portion 7112 in a surface contact manner therewith and may extend through the opening 261 of the tub 20. Accordingly, the leakage of washing water through a gap between the outer circumferential surface of the insert portion 7112 and the opening 261 of the tub 20 may be prevented by the cylindrical portion 7121.

The flange portion 7122 is disposed between the left side surface of the housing body 7111 and the left side portion 26 of the tub 20 and is in surface contact therewith, and serves to prevent water leakage through a gap therebetween from occurring.

In addition, the gasket 712 may be made of a material having predetermined elasticity, for example, a material such as natural rubber or synthetic rubber. Accordingly, when the insert portion 7112 and the housing fastening portion 717 are coupled to each other, the flange portion 7122 is elastically deformed in a state of being sandwiched between the housing body 7111 and the left side portion 26 of the tub 20. For this reason, the flange portion 7122 may further perform an anti-loosening function of applying a preload to prevent the coupling between the insert portion 7112 and the housing fastening portion 717 from being released.

In one example, a flange 7114 extending so as to surround one end of the insert portion 7112 may be further disposed on a lower end of the housing body 7111.

A contact area between the flange portion 7122 of the gasket 712 and the housing body 7111 may be increased due to the flange 7114, and thus the leakage prevention function and the anti-loosening function of the gasket 712 may be improved.

The cover 716 includes the diffusion plate 7161 that defines the light-emitting surface 71a and diffuses the visible light introduced thereto through the light guide plate 714 toward the light-emitting surface 71a, and is coupled to the housing 711 to close the first accommodation space 7111a.

Based on the embodiment illustrated in FIGS. 8 and 9, a right side surface of the cover 716 extending in parallel with the light guide plate 714 may act as the diffusion plate 7161 acting as the light-emitting surface 71a.

However, the cover 716 may be entirely made of a single material in the same manner as the diffusion plate 7161 may be. When the cover 716 is entirely made of a single material as described above, the right side surface, the front surface 7164, the rear surface 7165, the upper end surface 7162, and the lower end surface 7163 except for the open left side surface of the cover 716 may act as the light-emitting surfaces from which the visible light L may be irradiated.

The cover 716 is coupled to the housing body 7111 of the housing 711 to close the first accommodation space 7111a of the housing body 7111 and serves to prevent washing water from flowing into the first accommodation space.

As shown in FIGS. 10 and 11, a fastening tab 7167 protruding from the cover toward the housing body 7111 and having a coupling hole defined therein may act as a coupling and fastening means of the cover to the housing body 7111 and may be integrally formed with the cover 716 and be disposed on each of the front surface 7164 and the rear surface 7165 of the cover 716. A third hook portion 7113c coupled to the coupling hole of the fastening tab 7167 in a hooked manner may be integrally formed with the housing body 7111 and be disposed on each of the front surface and the rear surface of the housing body 7111.

In addition, a stopping hole 7163a formed to be concave downward may be defined in the lower end surface 7163 of the cover 716, and a stopping protrusion inserted into the stopping hole 7163a may be integrally formed with the housing body and be disposed on the lower end surface of the housing body 7111.

In one example, a means for preventing washing water from flowing into the first accommodation space may be embodied as a pair of coupling ribs 7166 which are disposed on an inner side surface of the cover 716 and are integrally formed therewith and respectively extend in parallel to the inner front surface 7164 and the inner rear surface 7165.

The pair of coupling ribs 7166 may be arranged side by side and extend in parallel manner to each other so that a pair of slots, each having a predetermined spacing, are defined between one of the pair of coupling ribs 7166 and the inner front surface 7164 of the cover and between the other thereof and the inner rear surface 7165 of the cover 716, respectively.

The predetermined spacing may correspond to a thickness of each of the front portion and the rear portion of the housing body 7111.

Accordingly, when the cover 716 is coupled to the housing body 7111, each of the front portion and the rear portion of the housing body 7111 may be fitted into and coupled to each slot defined in the inner space of the cover 716, such that an coupling area between the cover 716 and the housing body 7111 may be increased, thereby effectively preventing the washing water from flowing into the first accommodation space 7111a.

In one example, as described above, the lighting device 71 according to the first embodiment of the present disclosure is coupled and fixed to the inner side surface of each of the both opposing side portions 26 and 27 of the tub 20 while being in a surface contact therewith.

As described above, the fixing means for fixing the lower end of the lighting device 71 to the tub 20 may be embodied as the insert portion 7112 of the housing 711 and the housing fastening portion 717.

In one example, a fastening bracket disposed on the inner side surface of each of both opposing side portions 26 and 27 of the tub 20 may act as a fixing means for fixing the upper end of the lighting device 71 to the tub 20.

FIG. 11 illustrates an example configuration in which a fastening bracket 262 is disposed on the inner side surface of the left side portion 26 of the tub 20. When the lighting device 71 is also disposed on the right side portion 27 of the tub 20, a fastening bracket having the same shape and structure as those of the fastening bracket 262 may be disposed on the inner side surface of the right side portion 27 of the tub 20. Unless otherwise described, the structure of the fastening bracket 262 as described below may be equally applied to that disposed on the right side portion 27 of the tub 20.

As illustrated in FIG. 11, the fastening bracket 262 for fixing and supporting the upper end of the lighting device 71 to the tub may be disposed on the inner side surface of the left side portion 26 of the tub 20.

By way of example, the fastening bracket 262 may be configured to include a plate-shaped bracket body 2621 fixed to the inner side surface of the tub 20 in a surface contact manner, and a first fastening bracket 2622 and a pair of second fastening brackets 2623 bent from the bracket body 2621 toward the housing 711 of the lighting device 71.

In a similar manner to the tub 20, the bracket body 2621 may be formed by pressing a stainless steel plate in consideration of a use environment exposed to high-temperature washing water.

In order to prevent the water leakage, the plate-shaped bracket body 2621 may be attached to the tub 20 in a surface contact manner, and preferably, may be firmly attached to the inner side surface of the tub 20 in a welding manner.

The first fastening bracket 2622 may be integrally formed with the bracket body 2621 and may be formed by bending an upper end edge of the bracket body 2621 toward an upper end surface of the housing 711 of the lighting device 71.

Accordingly, one end of the first fastening bracket 2622 may be a fixed end integrally connected to the bracket body 2621, and the other end of the first fastening bracket 2622 may be a free end coupled to the housing 711 of the lighting device 71.

The first fastening bracket 2622 may be elastically detachably coupled to the upper end surface of the housing 711 of the lighting device 71.

As illustrated in FIG. 11, a second hook portion 7113b may protrude from the upper end surface 7162 of the lighting device 71 in a corresponding manner to the first fastening bracket 2622.

Accordingly, when the upper end of the lighting device 71 is pushed toward the fastening bracket 262, the second hook portion 7113b may press the first fastening bracket 2622 upwardly to elastically deform the first fastening bracket 2622 such that the first fastening bracket 2622 and the second hook portion 7113b are fastened to each other. After the fastening is completed, the second hook portion 7113b and the upper end of the housing 711 may be effectively prevented from being removed from the tub in the upward direction and the left-right direction under the elastic force of the first fastening bracket 2622.

The pair of second fastening brackets 2623 may be formed by bending the front edge and the rear edge of the bracket body 2621 toward the front surface and the rear surface of the housing 711 of the lighting device 71, respectively.

Accordingly, one end of each second fastening bracket 2623 may be a fixed end integrally connected to the bracket body 2621, and the other end of each second fastening bracket 2623 may be a free end coupled to the housing 711 of the lighting device 71.

Unlike the first fastening bracket 2622, the coupling in the hooked manner is not achieved between each of the pair of second fastening brackets 2623 and the housing 711.

However, a minimum spacing between the pair of second fastening brackets 2623 may be smaller than a width in the front-rear direction of the housing 711, and accordingly, when the housing 711 is inserted into the spacing between the pair of second fastening brackets 2623, the pair of second fastening brackets 2623 may be elastically deformed to bring about a state in which the housing 711 is elastically pressed.

Therefore, after the coupling has been completed, the upper end of the housing 711 may be effectively prevented from being removed from the tub in the front-rear direction under the elastic force of the pair of second fastening brackets 2623.

### [Detailed Configuration of Lighting Device According to Second Embodiment]

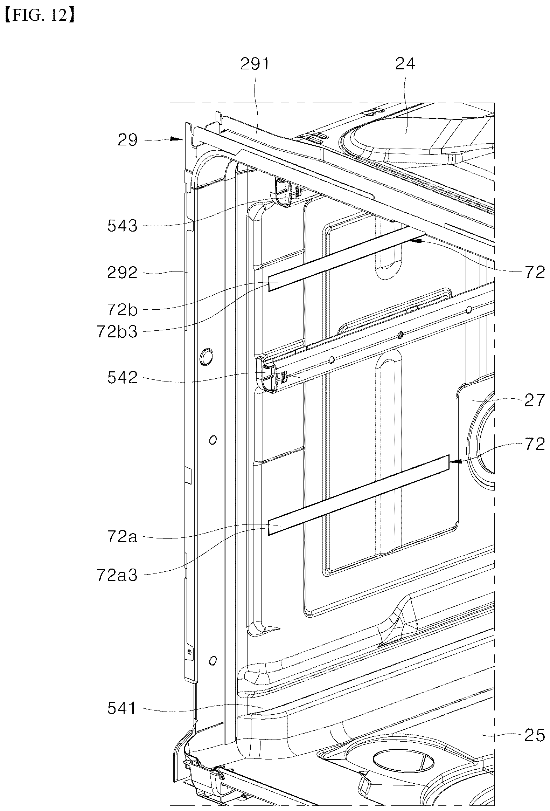

Hereinafter, a lighting device 72 according to a second embodiment of the present disclosure will be described with reference to FIG. 12.

Referring to FIG. 12, in a similar manner to the first embodiment as described above, the lighting device 72 according to the second embodiment of the present disclosure is fixed to each of the left side portion 26 and the right side portion 27 of the tub 20.

However, unlike the first embodiment, the lighting device 72 according to the second embodiment is disposed on the tub 20 such that a light-emitting surface thereof extends linearly in the front-rear direction.

More specifically, the light-emitting surface 72a and 72b of the lighting device 72 according to the second embodiment may extend linearly from one end edge toward the other end edge, and the front-rear direction may be the longitudinal direction thereof such that one end edge becomes the front end edge 72a3 and 72b3 and the other end edge becomes the rear end edge.

That is, the lighting device 72 according to the second embodiment of the present disclosure has substantially the same basic configuration as that of the above-described second embodiment. However, in the second embodiment, only the extending direction of the light-emitting surface 72a and 72b may be different from that of the above-described first embodiment.

Therefore, hereinafter, the configuration distinct from that of the first embodiment will be described, and a description of the same configuration as that of the first embodiment will be omitted or the contents duplicate with those as set forth above in the first embodiment will be omitted.

As shown in FIG. 12, the lighting device 72 according to the second embodiment of the present disclosure may extend on and along the inner side surface of the tub 20 such that the front-rear direction is the longitudinal direction thereof.

By way of example, the light-emitting surface 72a and 72b of the lighting device 72 according to the second embodiment may extend in a direction parallel to the extending direction of each of the top rail 543, the upper rail 542 and the lower rail 541 disposed inside the tub 20.

In this way, the light-emitting surface 72a and 72b of the lighting device 72 according to the second embodiment extends in a direction parallel to the extending direction of each of the top rail 543, the upper rail 542 and the lower rail 541 disposed inside the tub 20, such that the light-emitting surface 72a and 72b may illuminate the inner space 21 of the tub 20 in the front-rear direction.

However, when only one lighting device 72 is disposed on each of the left side portion 26 of the tub 20 and the right side portion 27 of the tub 20, a state in which visible light is screened with the upper rack 52 may occur.

That is, when the light-emitting surface 72a and 72b of the lighting device 72 is disposed at a vertical position lower than that of the upper rack 52, the lighting effect of the lower rack 51 may be further improved, while the visible light is screened with the upper rack 52 and thus the lighting effect of the top rack 53 may be reduced.

In addition, when the light-emitting surface 72a and 72b of the lighting device 72 is disposed at a higher vertical position than that of the upper rack 52, the lighting effect of the top rack 53 may be further improved, while the visible light is screened with the upper rack 52, and thus the lighting effect of the lower rack 51 may be reduced.

In consideration of such a situation, the lighting device 72 according to the second embodiment may be provided as a pair of lighting devices spaced apart from each other in the vertical direction, wherein the pair of lighting devices spaced apart from each other in the vertical direction may be disposed on the inner side surface of each of the left side portion 26 of the tub 20 and the right side portion 27 of the tub 20.

FIG. 12 illustrates a configuration in which the pair of lighting devices 72 spaced apart from each other in the vertical direction are disposed on the inner side surface of the right side portion 27 of the tub 20.

Although not shown in FIG. 12, the pair of lighting devices 72 having the same configuration as that of the pair of lighting devices 72 disposed on the right side portion may be spaced apart along the vertical direction and may be disposed on the left side portion 26 of the tub.

Hereinafter, for convenience, the lighting device 72 disposed on the right side portion 27 of the tub 20 will be described. However, the same descriptions as set forth below may be equally applied to that disposed on the left side portion 26 of the tub 20 unless otherwise described.

As illustrated in FIG. 12, when the pair of lighting devices 72 are disposed on the inner side surface of the right side portion 27 of the tub 20 and extend in a parallel manner thereto, the pair of light-emitting surfaces 72a and 72b may include a first light-emitting surface 72a and a second light-emitting surface 72b spaced apart from each other in the vertical direction.

For convenience, among the pair of light-emitting surfaces 72a and 72b, one disposed at a lower vertical position will be referred to as the first light-emitting surface 72a, and the other disposed at a higher vertical position will be referred to as the second light-emitting surface 72b.

As illustrated, the first light-emitting surface 72a of the lighting device 72 according to the second embodiment may be disposed between the lower rail 541 and the upper rail 542 in the vertical direction.

In this regard, in order to maximize the lighting effect of the lower rack 51, the first light-emitting surface 72a is located at a higher vertical position than that of the upper end of the lower rack 51. In the vertical direction, the first light-emitting surface 72a may be disposed between the lower rack 51 and the upper rack 52. The first light-emitting surface 72a may extend along an area between the lower rack 51 and the upper rack 52.

In addition, the second light-emitting surface 72b of the lighting device 72 according to the second embodiment may be disposed between the upper rail 542 and the top rail 543 in the vertical direction.

In this regard, in order to maximize the lighting effect of the upper rack 52, the second light-emitting surface 72b is located at a higher vertical position than that of the upper end of the upper rack 52. In the vertical direction, the second light-emitting surface 72b may be disposed between the upper rack 52 and the top rack 53 and may extend along an area between the upper rack 52 and the top rack 53.

In one example, like the first embodiment, the lighting device 72 according to the second embodiment is constructed to extend linearly.

As described above, in consideration of the linearly extending shape, each of the front end edge 72a3 of the first light-emitting surface 72a and the front end edge 72b3 of the second light-emitting surface 72b should be positioned in an area which the upper rail 542 is disposed and fixed.

That is, as illustrated in FIG. 12, the front end of the lower rail 541 as a start point from which the lower rail 541 starts to extend is formed as a curved surface. Thus, in consideration of this fact, each of the front end of the front end edge 72a3 of the first light-emitting surface 72a and the front end of the second light-emitting surface 72b may be disposed further rearwardly in the front-rear direction beyond the front end of the lower rail 541.

In addition, as illustrated in FIG. 12, the curved portion is disposed in the right side portion 27 of the tub 20 at a position corresponding to the front end of the upper rail 542 from which the upper rail 542 starts to extend. In consideration of this fact, each of the front end edge 72a3 of the first light-emitting surface 72a and the front end edge 72b3 of the second light-emitting surface 72b may be disposed further rearwardly in the front-rear direction beyond the front end of the upper rail 542.

Although not shown, for the similar reason, each of a rear end edge of the first light-emitting surface 72a and a rear end edge of the second light-emitting surface 72b may be disposed further in the frontward direction beyond the rear end of the upper rail 542 in the front-rear direction.

Accordingly, each of a length in the front-rear direction of the first light-emitting surface 72a and a length in the front-rear direction of the second light-emitting surface 72b may be smaller than the length in the front-rear direction of the upper rail 542.

Although the embodiments of the present disclosure have been described above in more detail with reference to the accompanying drawings, the present disclosure is not necessarily limited to these embodiments, and may be modified in a various manner within the scope of the technical spirit of the present disclosure. Accordingly, the embodiments as disclosed in the present disclosure are intended to describe rather than limit the technical idea of the present disclosure, and the scope of the technical idea of the present disclosure is not limited by these embodiments. Therefore, it should be understood that the embodiments described above are not restrictive but illustrative in all respects. In addition, even though an effect of a configuration of the present disclosure is not explicitly described in describing the embodiment of the present disclosure above, it is obvious that the predictable effect from the configuration should be recognized.

## Claims

1. A dishwasher comprising:
a tub having a washing space defined therein, wherein the washing space accommodates therein dishes and has an open front surface;
a dish rack constructed to extend from or retract into the washing space, wherein the dishes are placed in the dish rack;
a guide rail disposed in the washing space and constructed to support the dish rack such that the dish rack extends from or retract into the tub; and
a lighting device having a light-emitting surface emitting visible light toward the washing space, wherein the lighting device is installed on an inner side surface of the tub,
wherein the light-emitting surface extends linearly from one end edge thereof toward the other end edge thereof.

2. The dishwasher of claim 1, wherein the one end edge is an upper end edge of the light-emitting surface,
wherein the other end edge is a lower end edge of the light-emitting surface.

3. The dishwasher of claim 2, wherein a spacing between the upper end edge and the lower end edge is maintained to be constant as the light-emitting surface extends from a front end edge of the light-emitting surface toward a rear end edge of the light-emitting surface.

4. The dishwasher of claim 3, wherein a spacing between the front end edge and the rear end edge is maintained to be constant as the light-emitting surface extends from the upper end edge toward the lower end edge.

5. The dishwasher of claim 2, wherein the tub includes:
an upper tub constituting an upper surface of the tub;
a bottom tub constituting a lower surface of the tub; and
a middle tub disposed between the upper tub and the bottom tub and coupled to the upper tub and the bottom tub,
wherein the upper end edge is disposed at a vertical position lower than a vertical position of a bonding portion between the upper tub and the middle tub.

6. The dishwasher of claim 5, wherein the guide rail includes:
a top rail disposed at an uppermost level in a vertical direction;
a lower rail disposed at a lowermost level in the vertical direction; and
an upper rail disposed between the top rail and the lower rail in the vertical direction,
wherein the upper end edge is disposed between the bonding portion and the upper rail in the vertical direction and is closer to the bonding portion than to the upper rail.

7. The dishwasher of claim 2, wherein the guide rail includes:
a top rail disposed at an uppermost level in a vertical direction;
a lower rail disposed at a lowermost level in the vertical direction; and
an upper rail disposed between the top rail and the lower rail in the vertical direction,
wherein the lower end edge is disposed between the upper rail and the lower rail in the vertical direction.

8. The dishwasher of claim 7, wherein the lower end edge is disposed closer to the lower rail than to the upper rail in the vertical direction.

9. The dishwasher of claim 2, wherein the guide rail includes:
a top rail disposed at an uppermost level in a vertical direction;
a lower rail disposed at a lowermost level in the vertical direction; and
an upper rail disposed between the top rail and the lower rail in the vertical direction,
wherein the front end edge of the light-emitting surface is disposed further rearwardly beyond a front end of the lower rail in a front-rear direction.

10. The dishwasher of claim 9, wherein the front end edge of the light-emitting surface is disposed further in a frontward direction beyond a front end of the upper rail in the front-rear direction.

11. The dishwasher of claim 1, wherein the lighting device is fixed to an inner side surface of at least one of a left side portion or a right side portion of the tub.

12. The dishwasher of claim 11, wherein an opening extends through at least one of the left side portion or the right side portion of the tub such that an inner space of the tub and an outside out of the tub communicate with each other through the opening,
wherein the lighting device passes through the opening and is disposed in the tub so as to have a portion disposed in the inner space of the tub and a portion disposed in the outside out of the tub.

13. The dishwasher of claim 12, wherein the lighting device includes:
a light source unit configured to generate the visible light;
a light guide plate constructed to change a travel path of the visible light generated from the light source unit;
a housing having first and second accommodation spaces defined therein, wherein the first accommodation space accommodates the light guide plate therein and the second accommodation space accommodates the light source unit therein; and
a cover including a diffusion plate constituting the light-emitting surface and configured to diffuse the visible light introduced thereto through the light guide plate toward the light-emitting surface, wherein the cover is coupled to the housing to close the first accommodation space,
wherein the housing includes an insert portion protruding from one side surface of the housing toward the inner side surface of the tub, wherein the insert portion passes through the opening and extends to the outside out of the tub,
wherein an entirety of the housing except for the insert portion is disposed in the inner space of the tub.

14. The dishwasher of claim 13, wherein the insert portion fixes the lighting device to the tub.

15. The dishwasher of claim 13, wherein the second accommodation space is defined in the insert portion, wherein the light source unit passes through the insert portion and the opening such that one end of the light source unit is disposed in the outside out of the tub.

16. A dishwasher comprising:
a tub having a washing space defined therein, wherein the washing space accommodates therein dishes and has an open front surface;
a dish rack constructed to extend from or retract into the washing space, wherein the dishes are placed in the dish rack;
a guide rail disposed in the washing space and constructed to support the dish rack such that the dish rack extends from or retract into the tub; and
a lighting device having a light-emitting surface emitting visible light toward the washing space, wherein the lighting device is installed on an inner side surface of the tub,
wherein the light-emitting surface extends linearly from one end edge thereof toward the other end edge thereof,
wherein the one edge is a front end edge of the light-emitting surface,
wherein the other end edge is a rear end edge of the light-emitting surface.

17. The dishwasher of claim 16, wherein the guide rail includes:
a top rail disposed at an uppermost level in a vertical direction;
a lower rail disposed at a lowermost level in the vertical direction; and
an upper rail disposed between the top rail and the lower rail in the vertical direction,
wherein the front end edge is disposed further rearwardly beyond a front end of the lower rail in a front-rear direction.

18. The dishwasher of claim 17, wherein the front end edge is disposed further rearwardly beyond a front end of the upper rail in the front-rear direction.

19. The dishwasher of claim 17, wherein the light-emitting surface includes a first light-emitting surface and a second light-emitting surface spaced apart from each other in the vertical direction.

20. The dishwasher of claim 19, wherein the first light-emitting surface is disposed between the lower rail and the upper rail in the vertical direction,
wherein the second light-emitting surface is disposed between the upper rail and the top rail in the vertical direction.
